# EUROPEAN PATENT APPLICATION

(11) **EP 4 790 470 A1**
(43) Date of publication of application: **12.08.2026**
(21) Application number: 23954678.1
(22) Date of filing: 02.10.2023
(51) Int. Cl.: G02B 13/16, G02B 13/18

(54) **MICRO-PROJECTOR OPTICAL SYSTEM AND GLASSES-TYPE TERMINAL**

(71) Applicant: Cellid, Inc., Tokyo 106-0032 (JP)
(72) Inventor: INABATA Tatsuo, Tokyo 106-0032 (JP)
(74) Representative: Plougmann Vingtoft a/s
(86) International application number: PCT/JP2023/035857
(87) International publication number: WO 2025/074463

(57) **Abstract**

A micro-projector optical system for displaying an incident image light onto a display surface, the system including a first lens, a second lens, and a third lens, in order from a side of the display surface, wherein a paraxial refractive power of the first lens and the third lens is positive, a paraxial refractive power of the second lens is negative, where ft is an overall focal length of the micro-projector optical system, the first lens satisfies a predetermined expression using a focal length f1, the second lens satisfies a predetermined expression using a focal length f2, and the third lens satisfies a predetermined expression using a focal length f3.

## Description

### [Technical Field]

The present invention relates to a micro-projector optical system and a glasses-type terminal.

### [Background of the Invention]

Conventionally, eyeglass-type devices, head-mounted displays, and the like, each including a display panel that generates an image, a micro-projector lens, a waveguide, and the like, and configured to display two-dimensional images and the like so as to allow a user to observe the same, have been known (see, for example, Patent Documents 1 and 2).

### [Prior Art]

### [Patent Document]

[Patent Document 1] Japanese Unexamined Patent Application Publication No. 2017-207686
[Patent Document 2] WO 2023/047488

### [Brief Description of the Invention]

### [Problem to be solved by the invention]

Since such devices incorporate an optical system into a limited space, the optical system may become complex. Further, when a simple optical system is employed, an image may fail to be projected sufficiently onto a required display region, or the displayed image may be degraded.

The present invention has been made in view of these points, and its object is to provide a compact micro-projector lens with a simple configuration in an optical system constituting a micro-projector.

### [Means for Solving the Problem]

A first aspect of the present invention provides a micro-projector optical system for displaying an incident image light onto a display surface, the micro-projector optical system including: a first lens, a second lens, and a third lens, in order from a side of the display surface, wherein a paraxial refractive power of the first lens and the third lens is positive, a paraxial refractive power of the second lens is negative, where ft is an overall focal length of the micro-projector optical system and f1 is a focal length of the first lens, the first lens satisfies the following expression, $\frac{\left(\frac{1}{f 1}\right)}{\left(\frac{1}{ft}\right)} ≧ 0.6$ where f2 is a focal length of the second lens, the second lens satisfies the following expression, and $\frac{\left(\frac{1}{f 2}\right)}{\left(\frac{1}{ft}\right)} ≦ - 1$ where f3 is a focal length of the third lens, the third lens satisfies the following expression, $\frac{\left(\frac{1}{f 3}\right)}{\left(\frac{1}{ft}\right)} ≧ 1$

The first lens, the second lens, and the third lens may further satisfy the following expression, $\frac{\left(\frac{1}{f 1}\right) + \left(\frac{1}{f 2}\right) + \left(\frac{1}{f 3}\right)}{\left(\frac{1}{ft}\right)} < 1.0$

At least one of a first surface on a side of the display surface and a second surface opposite to the first surface of at least one of the first lens, the second lens, and the third lens may be aspherical.

The second lens may be a meniscus lens in which a first surface on a side of the display surface and a second surface opposite to the first surface are convex toward the third lens along an optical axis.

The micro-projector optical system may further include an aperture stop provided between the display surface and the first lens.

Where TT is a distance from the aperture stop to an image plane on which the image light is formed, an overall focal length ft of the micro-projector optical system may satisfy the following expression, $\frac{ft}{TT} ≧ 0.4$

At least one of a first surface on a side of the display surface and a second surface opposite to the first surface of at least one of the first lens, the second lens, and the third lens may have a refractive power gradient such that the sign (positive or negative) of a refractive power on an optical axis is reversed toward an outer edge of the lens.

A second aspect of the present invention provides a glasses-type terminal worn by a user including: the display surface that is provided in at least one of a lens for a right eye and a lens for a left eye of the user, and displays the image light so that the user can visually recognize the image light; a frame that fixes the lens for the right eye and the lens for the left eye of the user; an image light emission unit that is provided in the frame and emits the image light; and the micro-projector optical system according to the first aspect, which is provided in the frame and receives the image light emitted from the image light output unit, and displays the incident image light on the display surface.

### [Effect of the Invention]

According to the present invention, a compact micro-projector lens can be realized with a simple configuration.

### [Brief Description of the Drawings]

FIG. 1 shows a configuration example of a glasses-type terminal 10 according to the present embodiment.
FIG. 2 illustrates a first configuration example of a micro-projector optical system 100 according to the present embodiment.
FIG. 3 shows an example of values of an OTF with respect to spatial frequency of the micro-projector optical system 100 of the first configuration example.
FIG. 4 shows an example of values of the OTF with respect to spatial frequency of a comparative optical system.
FIG. 5 shows an example of aberrations of the micro-projector optical system 100 of the first configuration example.
FIG. 6 shows an example of design values of the micro-projector optical system 100 of the first configuration example.
FIG. 7 shows an example of aspherical coefficients of the lenses used in the micro-projector optical system 100 of the first configuration example.
FIG. 8 illustrates a second configuration example of a micro-projector optical system 100 according to the present embodiment.
FIG. 9 shows an example of values of the OTF with respect to spatial frequency of the micro-projector optical system 100 of the second configuration example.
FIG. 10 shows an example of aberrations of the micro-projector optical system 100 of the second configuration example.
FIG. 11 shows an example of design values of the micro-projector optical system 100 of the second configuration example.
FIG. 12 shows an example of aspherical coefficients of the lenses used in the micro-projector optical system 100 of the second configuration example.
FIG. 13 illustrates a third configuration example of the micro-projector optical system 100 according to the present embodiment.
FIG. 14 shows an example of values of the OTF with respect to spatial frequency of the micro-projector optical system 100 of the third configuration example.
FIG. 15 shows an example of aberrations of the micro-projector optical system 100 of the third configuration example.
FIG. 16 shows an example of design values of the micro-projector optical system 100 of the third configuration example.
FIG. 17 shows an example of aspherical coefficients of the lenses used in the micro-projector optical system 100 of the third configuration example.

### [Description of Embodiments]

### <Configuration example of glasses-type terminal 10>

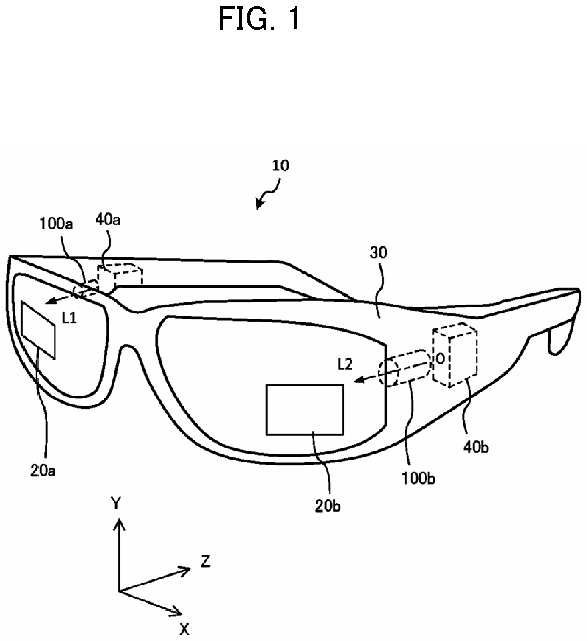

FIG. 1 shows a configuration example of a glasses-type terminal 10 according to the present embodiment. In FIG. 1, three orthogonal axes are designated as an X-axis, a Y-axis, and a Z-axis. The glasses-type terminal 10 is, for example, a wearable device worn by a user. The glasses-type terminal 10 projects image light onto a display surface provided on a lens of glasses while having a user observe a view through glasses. The glasses-type terminal 10 includes a display surface 20, a frame 30, an image light emission unit 40, and a micro-projector optical system 100.

The display surface 20 is provided on at least one of a lens for the right eye and a lens for the left eye of the user. The display surface 20 displays an image light emitted from the micro-projector optical system 100 so that the user can visually recognize the image light. The display surface 20 is provided, for example, on a second surface of the lens, and projects the image light onto the second surface while transmitting at least a part of the light entering from a first surface of the lens to the eyes of the user. Here, the first surface of the lens is a surface of the lens facing the side opposite to the user when the user is wearing the glasses-type terminal 10. The display surface 20 may be a portion of a region of the second surface of the lens, or alternatively, may be substantially an entire region of the second surface of the lens. Further, the display surface 20 may be provided on the first surface of the lens.

The frame 30 fixes the lens. The frame 30 fixes, for example, the lens for the right eye and the lens for the left eye of the user. Alternatively, the frame 30 may be provided with one lens as a lens for both eyes of the user. In this case, the frame 30 may have a goggle shape. The frame 30 has parts such as a temple, and a strap, and the like so that the user can wear the glasses-type terminal 10.

The image light emission unit 40 is provided in the frame 30, and emits image light for projecting the image light onto the display surface 20. The frame 30 is provided with one or a plurality of such image light emission units 40. FIG. 1 shows an example in which an image light emission unit 40a for displaying an image light L1 on a display surface 20a and an image light emission unit 40b for displaying an image light L2 on a display surface 20b are provided in the frame 30.

The image light emission unit 40 may be provided at a portion to which the lens of the frame 30 is fixed, or may be provided in a temple or the like of the frame 30. The image light emission unit 40 is preferably provided integrally with the frame 30. For example, the image light emission unit 40 may include a display panel such as a liquid crystal, and may display an image to be displayed on the display surface 20 on the liquid crystal.

The micro-projector optical system 100 is provided in the frame 30, receives the image light emitted from the image light emission unit 40, and displays the incident image light on the display surface 20. The micro-projector optical system 100 includes a plurality of lenses, enlarges the field of view of the incident image light, and outputs the incident image light toward the display surface 20. The image light output from the micro-projector optical system 100 may be emitted onto the display surface 20 via a mirror or the like. FIG. 1 shows an example in which a micro-projector optical system 100a corresponding to the image light emission unit 40a and a micro-projector optical system 100b corresponding to the image light emission unit 40b are provided in the frame 30.

Since the glasses-type terminal 10 as described above incorporates an optical system into a limited space, the optical system may become complicated. Further, when a simple optical system is employed, the image light may fail to be projected sufficiently onto the display surface 20, or the displayed image may be degraded. Therefore, the micro-projector optical system 100 according to the present embodiment is configured to have a simple and compact optical system, while having, for example, a large field of view and reducing degradation. Next, the micro-projector optical system 100 will be described.

### <First configuration example of micro-projector optical system 100>

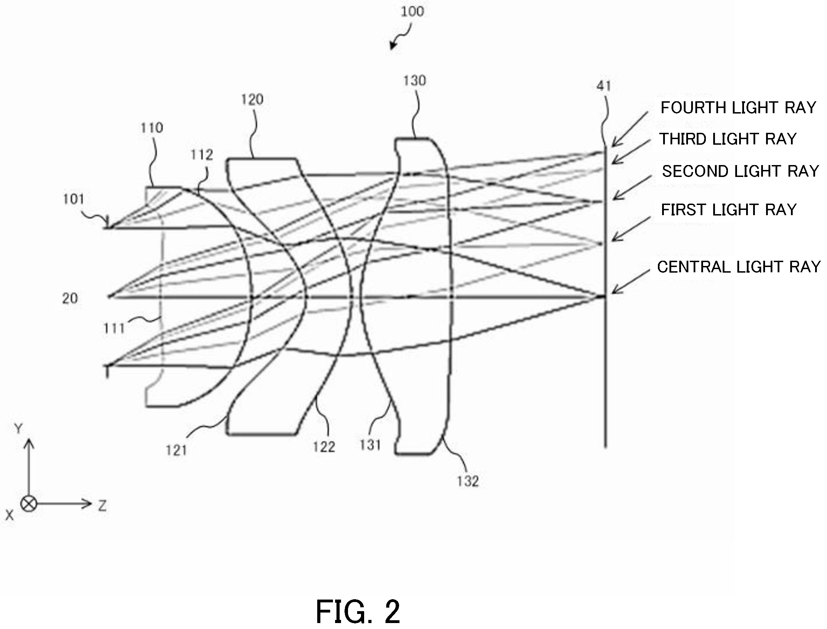

FIG. 2 shows a first configuration example of the micro-projector optical system 100 according to the present embodiment. The micro-projector optical system 100 is an optical system for displaying the incident image light on the display surface 20. In the present embodiment, an axis substantially parallel to an optical axis is defined as the Z-axis. Further, a direction in which the image light is input to the micro-projector optical system 100 and a direction in which the micro-projector optical system 100 outputs the image light are defined as a -Z direction. In addition, a display panel 41, which is a surface that emits an image of the image light emission unit 40 and is located on the input side of the micro-projector optical system 100, is shown.

The micro-projector optical system 100 includes, in order from the side of the display surface 20, an aperture stop 101, a first lens 110, a second lens 120, and a third lens 130. The aperture stop 101 is provided between the display surface 20 and the first lens 110, and adjusts brightness. The aperture stop 101 has an aperture for setting an aperture value. The aperture stop 101 is preferably configured to be capable of adjusting a size of the aperture.

Each of the first lens 110, the second lens 120, and the third lens 130 is a single lens. FIG. 2 shows an example in which the micro-projector optical system 100 is composed of a total of three lenses. In the present embodiment, the "display surface 20 side" indicates the eye point side of the micro-projector optical system 100, and the "input side" or the "display panel 41 side" indicates the object side of the micro-projector optical system 100.

The first lens 110, the second lens 120, and the third lens 130 are formed of, for example, plastic, glass, or the like. The paraxial refractive power of the first lens 110 and the third lens 130 is positive. The paraxial refractive power of the second lens 120 is negative. The first lens 110, the second lens 120, and the third lens 130 are fixed to a main body (not shown) of the micro-projector optical system 100. The first lens 110, the second lens 120, and the third lens 130 are preferably provided so as to be movable in an optical axis direction.

For example, the main body of the micro-projector optical system 100 is configured so that the user can manually adjust positions of the first lens 110, the second lens 120, and the third lens 130. Alternatively, the micro-projector optical system 100 may further include an actuator or the like for moving each lens individually.

In FIG. 2, a surface of the first lens 110, which faces the -Z direction and is located on the side of the display surface 20, is referred to as a first lens surface 111, and a surface of the first lens 110, which faces the +Z direction and is opposite to the first lens surface 111, is referred to as a second lens surface 112. Similarly, a surface of the second lens 120, which faces the -Z direction and is located on the side of the display surface 20 is referred to as a third lens surface 121, and a surface of the second lens 120, which faces the +Z direction and is opposite to the third lens surface 121, is referred to as a fourth lens surface 122. A surface of the third lens 130, which faces the -Z direction and is located on the side of the display surface 20, is referred to as a fifth lens surface 131, and a surface of the third lens 130, which faces the +Z direction and is opposite to the fifth lens surface 131, is referred to as a sixth lens surface 132.

At least one of a first surface on the side of the display surface 20 and a second surface opposite to the first surface of at least one of the first lens 110, the second lens 120, and the third lens 130 is aspherical. FIG. 2 shows an example in which the first lens surface 111, the second lens surface 112, the third lens surface 121, the fourth lens surface 122, the fifth lens surface 131, and the sixth lens surface 132 are all aspherical.

With ft being an overall focal length of the micro-projector optical system 100, and f1 being a focal length of the first lens 110, the first lens 110 satisfies the following expression. $\frac{\left(\frac{1}{f 1}\right)}{\left(\frac{1}{ft}\right)} ≧ 0.6$

With f2 being a focal length of the second lens 120, the second lens 120 satisfies the following expression. The third lens surface 121 and the fourth lens surface 122 of the second lens 120 are convex toward the third lens 130 located on a side opposite to the display surface 20 along the optical axis. The second lens 120 is, for example, a meniscus lens. $\frac{\left(\frac{1}{f 2}\right)}{\left(\frac{1}{ft}\right)} ≦ - 1$

With f3 being a focal length of the third lens 130, the third lens 130 satisfies the following expression. $\frac{\left(\frac{1}{f 3}\right)}{\left(\frac{1}{ft}\right)} ≧ 1$

In addition, the first lens 110, the second lens 120, and the third lens 130 further satisfy the following expression. $\frac{\left(\frac{1}{f 1}\right) + \left(\frac{1}{f 2}\right) + \left(\frac{1}{f 3}\right)}{\left(\frac{1}{ft}\right)} < 1.0$

The micro-projector optical system 100 can maintain a favorable value of an OTF (Optical Transfer Function) with respect to the spatial frequency by the first lens 110, the second lens 120, and the third lens 130 satisfying Expressions (1) to (4). The value of the OTF with respect to the spatial frequency is a value that comprehensively indicates imaging performance of the micro-projector optical system 100, and indicates, with respect to the spatial frequency, an ability to faithfully reproduce a contrast and a phase of the subject in an image. The spatial frequency is the number of black-and-white patterns per millimeter on an image plane, and a unit thereof is "line pairs/mm (where each line pair corresponds to one black-and-white pattern)".

### <OTF values with respect to spatial frequency of micro-projector optical system 100>

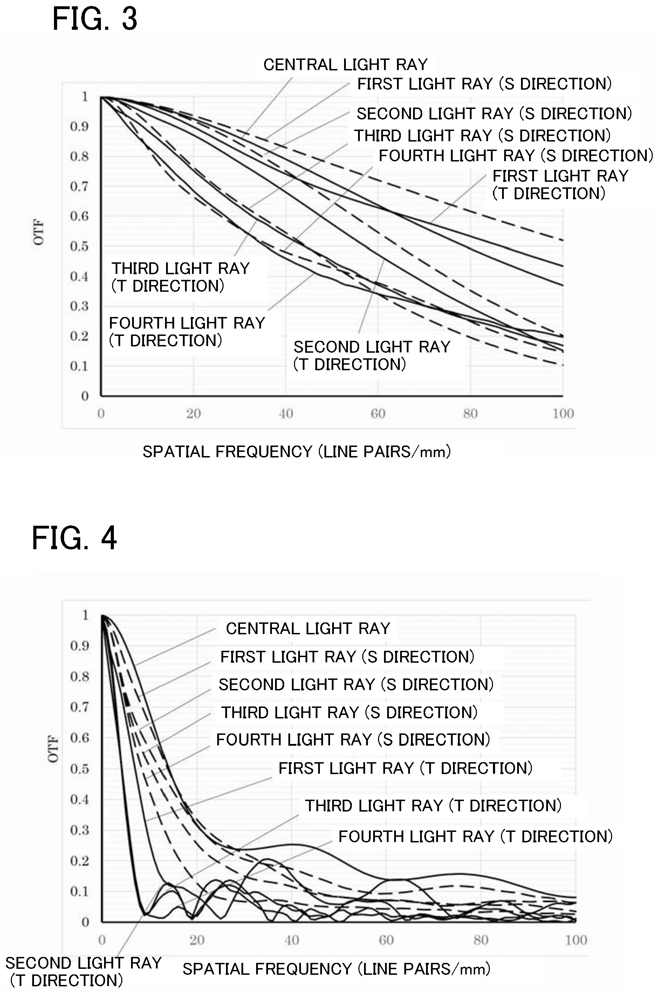

FIG. 3 shows an example of values of the OTF with respect to spatial frequency of the micro-projector optical system 100 of the first configuration example. FIG. 4 shows an example of values of the OTF with respect to spatial frequency of a comparative optical system. The comparative optical system is an optical system in which three lenses of the micro-projector optical system 100 do not satisfy Expressions (1) to (4). In FIGS. 3 and 4, the horizontal axis represents spatial frequency, and the vertical axis represents a value of the OTF. FIGS. 3 and 4 show results of simulations obtained by a reverse tracking optical system in which, for convenience of design, an infinite object point on the side of the display surface 20 is imaged on the display panel 41.

In FIGS. 3 and 4, simulation results of light rays in a tangential direction (T direction) are indicated by solid lines, and simulation results of light rays in a sagittal direction (S direction) are indicated by dashed lines. In addition, a light ray imaged at the center of the display panel 41 is referred to as a central light ray, a light ray incident on the first lens 110 at an incident angle of 12 degrees is referred to as a first light ray, a light ray incident on the first lens 110 at an incident angle of 21 degrees is referred to as a second light ray, a light ray incident on the first lens at an incident angle of 27 degrees is referred to as a third light ray, and a light ray incident on the first lens at an incident angle of 30 degrees is referred to as a fourth light ray.

In addition, a light ray in the tangential direction is a light ray in a radial direction when the lens is viewed from the Z direction, and is, for example, a light ray having black-and-white line pairs arranged concentrically about the Z-axis in a rotationally symmetric optical system. A light ray in the sagittal direction is a light ray in a direction orthogonal to the light ray in the tangential direction (for example, a direction in which black-and-white line pairs are arranged radially about the Z-axis).

In general, a display panel 41 including LCOS (Liquid Crystal On Silicon), OLED (Organic Light Emitting Diode), a micro LED, a laser device with Mems (Micro Electro Mechanical Systems), and the like has pixels of about 5 µm. When the spatial frequency is considered as a line width assuming black-and-white line pairs, if an OTF value at 100 line pairs/mm exceeds a value in a range of 0.1 to 0.3, the performance can be said to be favorable.

By comparing FIG. 3 and FIG. 4, it can be seen that, when the first lens 110, the second lens 120, and the third lens 130 satisfy Expressions (1) to (4), the micro-projector optical system 100 achieves favorable results for light rays having incident angles calculated from the central light ray to periphery light rays over a range from low spatial frequencies to high spatial frequencies.

Let TT be a distance (total track) from the aperture stop 101 to an image plane (display panel 41) on which the image light is formed. Then, it is desirable that the overall focal length ft of the micro-projector optical system 100 satisfies the following expression. $\frac{ft}{TT} ≧ 0.4$

According to the above expression, TT ≦ 2.5×ft, and the total track value TT is equal to or less than 2.5 times the overall focal length ft. The overall focal length ft is determined by the size of the display panel 41 and the field of view (FOV) of the micro-projector optical system 100. Therefore, satisfying Expression (5) means that the length of the micro-projector optical system 100 that satisfies the predetermined performance falls within a predetermined range of lengths. In other words, the micro-projector optical system 100 that satisfies Expressions (1) to (5) can be made compact by shortening the overall length of the optical system.

In the micro-projector optical system 100 described above, the refractive power of the lenses in a paraxial region has been described, but the present embodiment is not limited thereto. A shape of an outer edge of the lens may affect distortion of an image. Therefore, in at least one of the first lens 110, the second lens 120, and the third lens 130, at least one of the first surface on the side of the display surface 20 and the second surface opposite to the first surface has a refractive power gradient such that the positive or negative sign of the refractive power on the optical axis is reversed toward the outer edge of the lens.

In the example of FIG. 2, the first lens surface 111 of the first lens 110, the third lens surface 121 and fourth lens surface 122 of the second lens 120, and the fifth lens surface 131 of the third lens 130 have refractive power gradients such that the positive or negative sign of the refractive power on the optical axis is reversed toward the outer edge of the lens. This allows the micro-projector optical system 100 to have less aberration and more favorable imaging performance from the central image height to the peripheral image height.

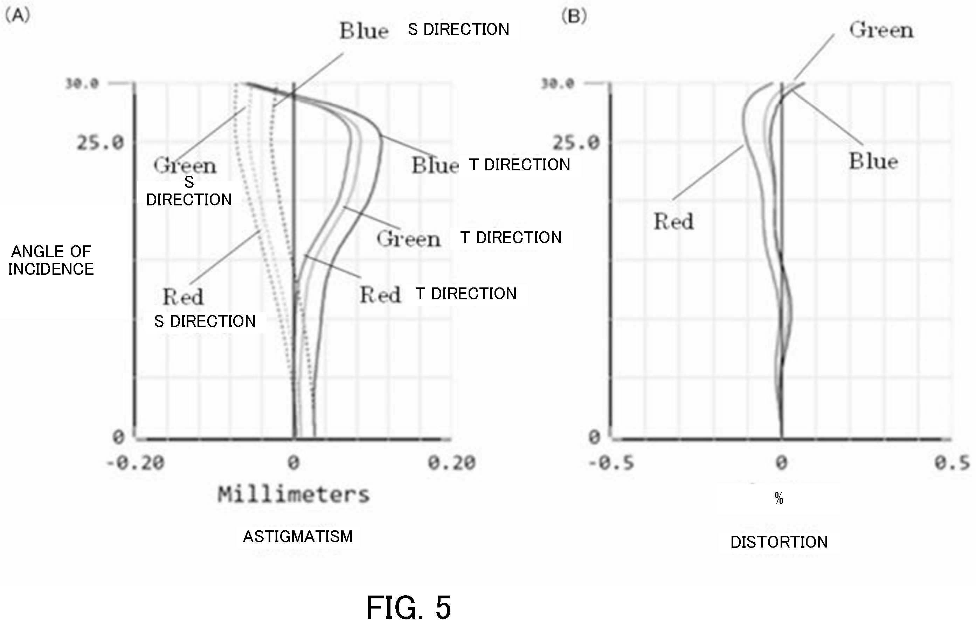

FIG. 5 shows an example of aberrations of the micro-projector optical system 100 of the first configuration example. FIG. 5(A) shows astigmatism of the micro-projector optical system 100, and FIG. 5(B) shows distortion of the micro-projector optical system 100. As shown in FIG. 5, the micro-projector optical system 100 can be realized with low distortion.

### <Design values of micro-projector optical system 100>

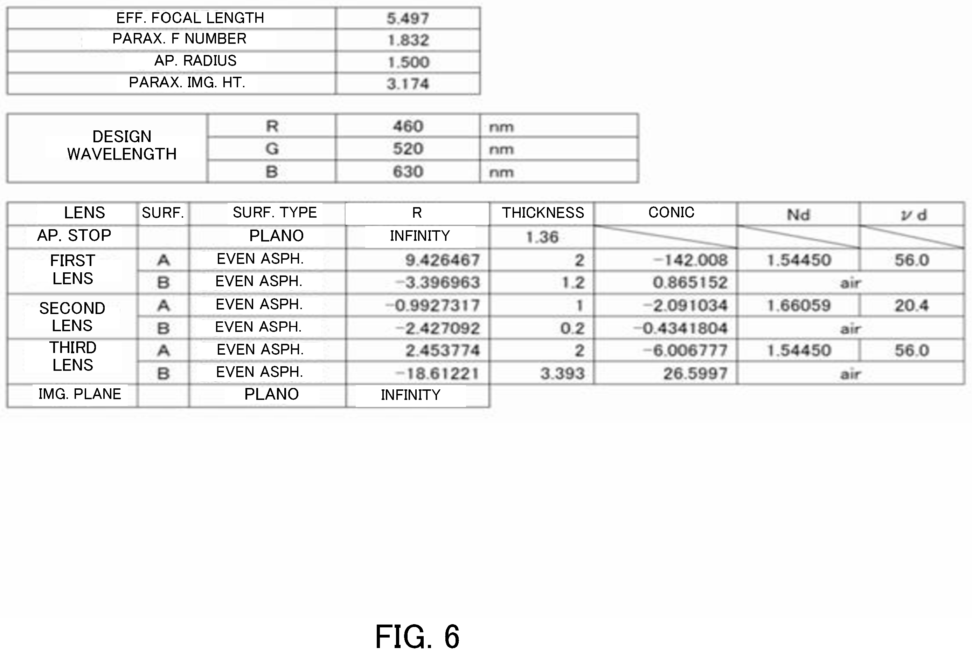

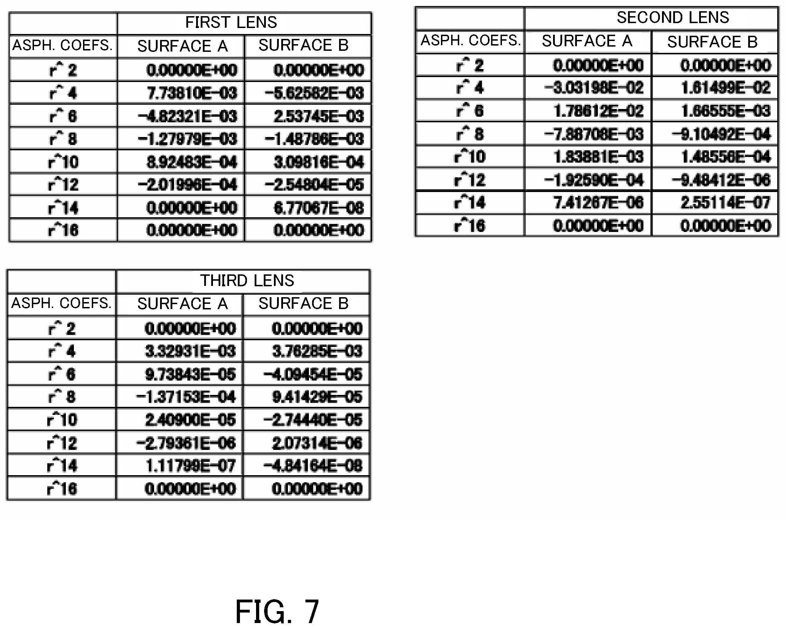

FIG. 6 shows an example of design values of the micro-projector optical system 100 of the first configuration example. FIG. 7 shows an example of aspherical coefficients of the lenses used in the micro-projector optical system 100 of the first configuration example. In the design values of FIGS. 6 and 7, the overall focal length ft of the micro-projector optical system 100 is 5.497, the total track TT is 10.963, and the value of ft/TT is 0.501.

In addition, (1/f1)/(1/ft) of the first lens 110 is 1.141, (1/f2)/(1/ft) of the second lens 120 is -1.587, and (1/f3)/(1/ft) of the third lens 130 is 1.344 (respectively, values on the left-hand sides of Expressions (1) to (3)). Further, the value of the left-hand side of Expression (4) is 0.898. By using such design values, the micro-projector optical system 100 can achieve the characteristics shown in FIGS. 3 and 5.

In the micro-projector optical system 100 according to the present embodiment, the optical system of the first configuration example shown in FIG. 2 has been described above, but the present embodiment is not limited thereto. For example, the micro-projector optical system 100 may have another configuration, as long as it satisfies Expressions (1) to (5). Next, an optical system having another configuration will be described.

### <Second configuration example of micro-projector optical system 100>

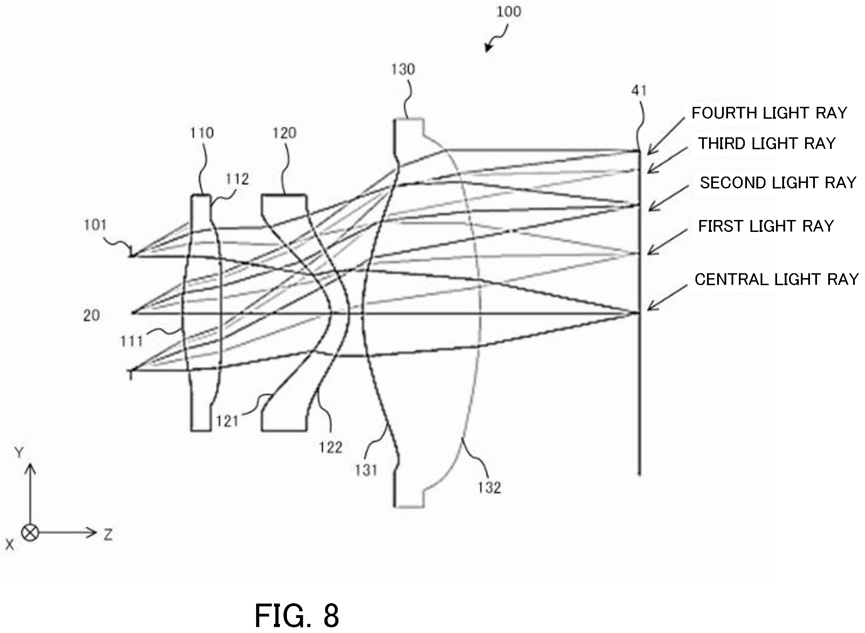

FIG. 8 shows a second configuration example of the micro-projector optical system 100 according to the present embodiment. In the micro-projector optical system 100 of the second configuration example, components having substantially the same functions as those of the micro-projector optical system 100 of the first configuration example shown in FIG. 2 are denoted by the same reference numerals, and redundant description thereof is omitted.

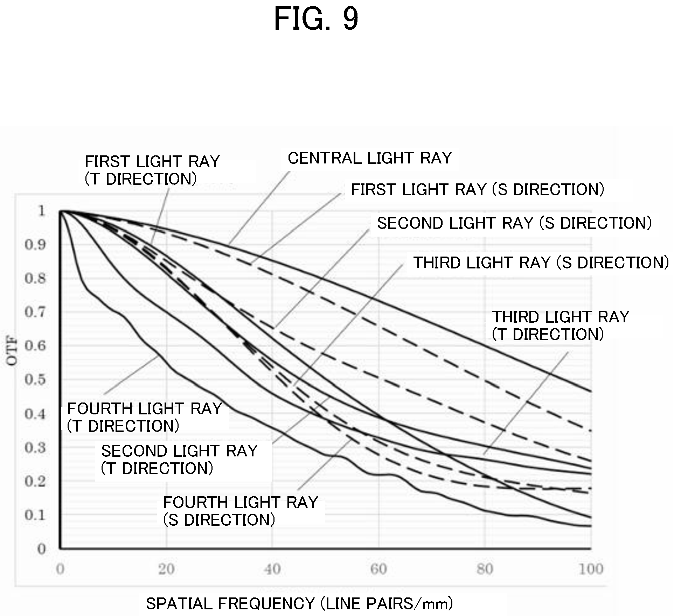

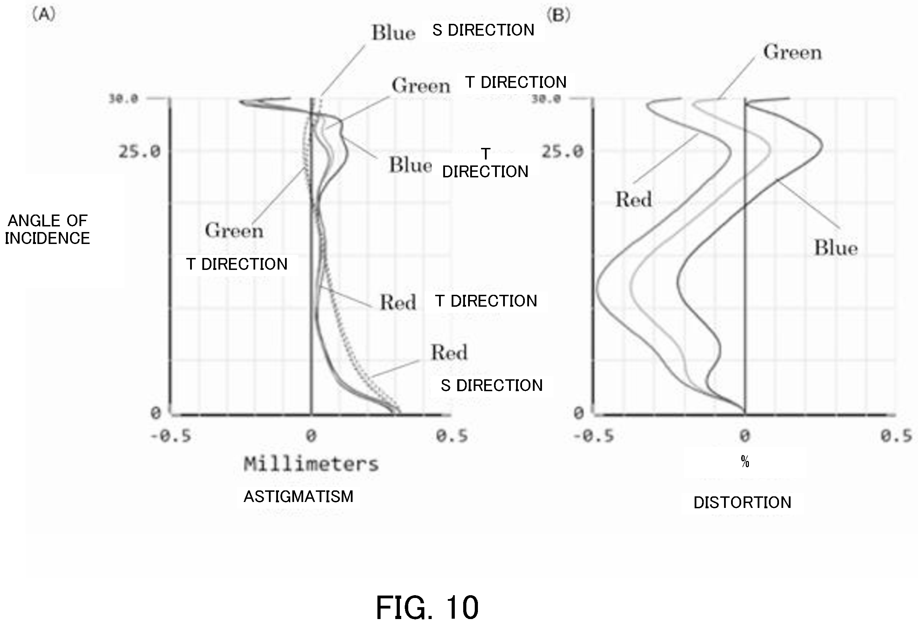

FIG. 9 shows an example of values of the OTF with respect to spatial frequency of the micro-projector optical system 100 of the second configuration example. FIG. 10 shows an example of aberrations of the micro-projector optical system 100 of the second configuration example. FIG. 10(A) shows astigmatism of the micro-projector optical system 100, and FIG. 10(B) shows distortion of the micro-projector optical system 100.

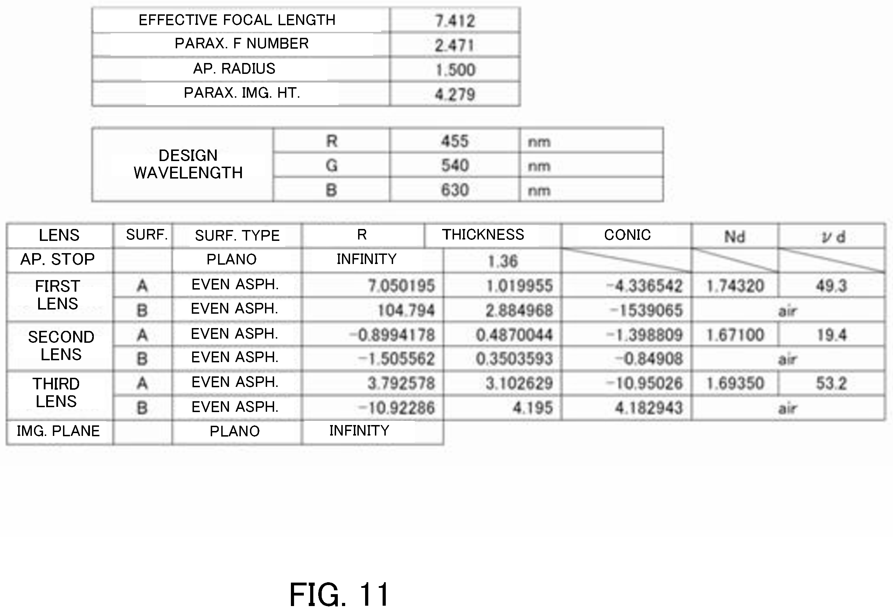

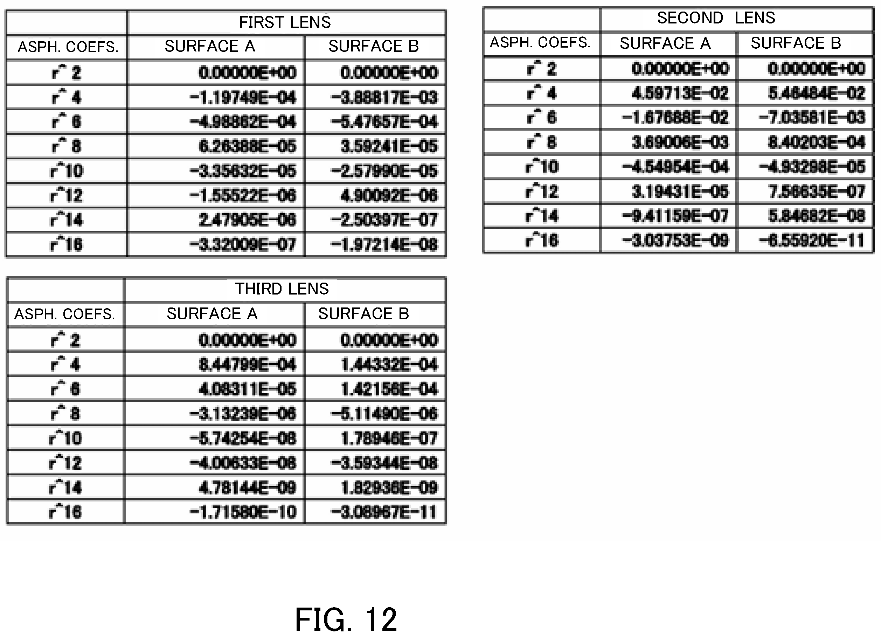

FIG. 11 shows an example of design values of the micro-projector optical system 100 of the second configuration example. FIG. 12 shows an example of aspherical coefficients of the lenses used in the micro-projector optical system 100 of the second configuration example. In the design values of FIGS. 11 and 12, the overall focal length ft of the micro-projector optical system 100 is 7.412, the total track TT is 13.4, and the value of ft/TT is 0.553.

In addition, (1/f1)/(1/ft) of the first lens 110 is 0.736, (1/f2)/(1/ft) of the second lens 120 is -1.525, and (1/f3)/(1/ft) of the third lens 130 is 1.677. Further, the value of the left-hand side of Expression (4) is 0.889. By using such design values, the micro-projector optical system 100 can achieve the characteristics shown in FIGS. 9 and 10.

### <Third configuration example of micro-projector optical system 100>

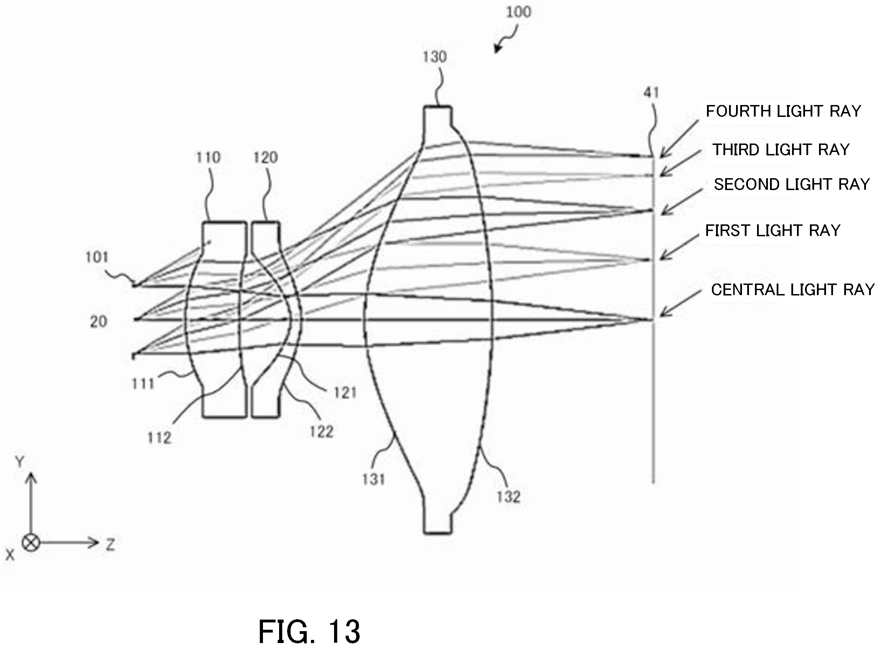

FIG. 13 shows a third configuration example of the micro-projector optical system 100 according to the present embodiment. In the micro-projector optical system 100 of the third configuration example, components having substantially the same functions as those of the micro-projector optical system 100 of the first configuration example shown in FIG. 2 are denoted by the same reference numerals, and redundant description thereof is omitted.

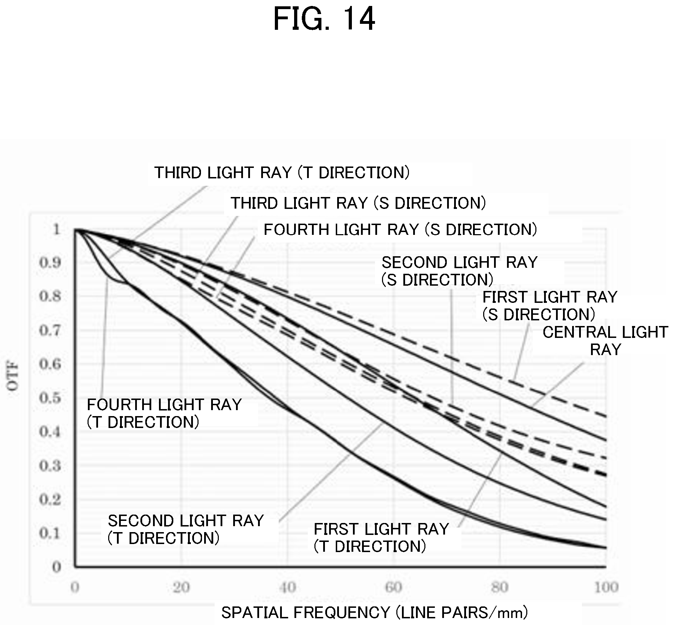

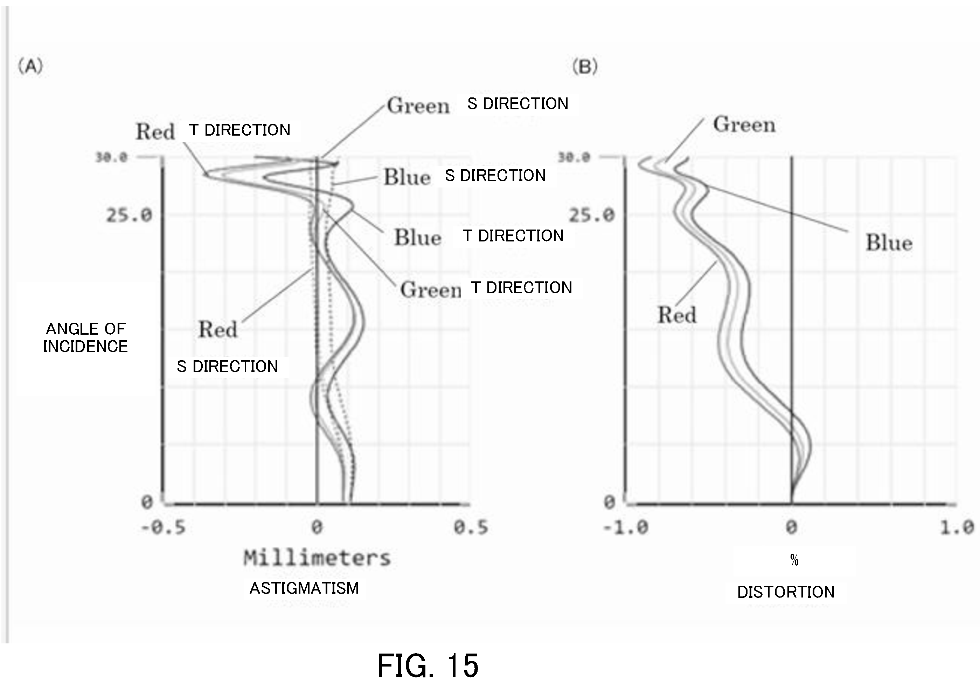

FIG. 14 shows an example of values of the OTF with respect to spatial frequency of the micro-projector optical system 100 of the third configuration example. FIG. 15 shows an example of aberrations of the micro-projector optical system 100 of the third configuration example. FIG. 15(A) shows astigmatism of the micro-projector optical system 100, and FIG. 15(B) shows distortion of the micro-projector optical system 100.

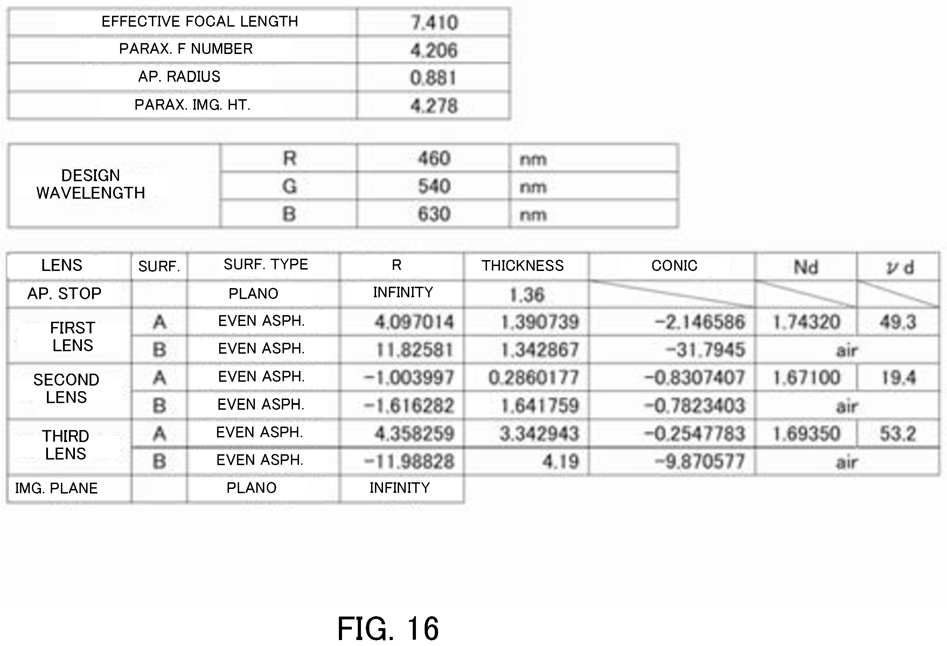

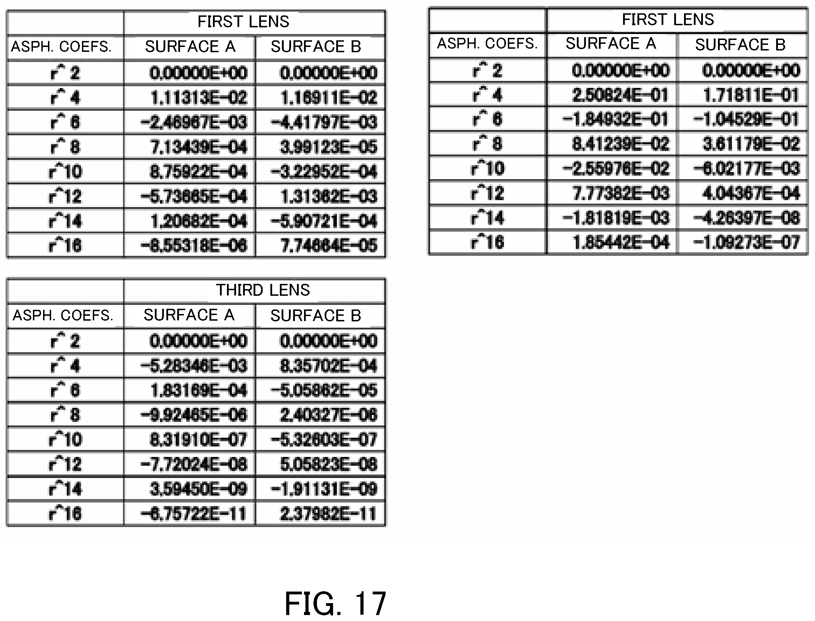

FIG. 16 shows an example of design values of the micro-projector optical system 100 of the third configuration example. FIG. 17 shows an example of aspherical coefficients of the lenses used in the micro-projector optical system 100 of the third configuration example. In the design values of FIGS. 16 and 17, the overall focal length ft of the micro-projector optical system 100 is 7.410, the total track TT is 13.55, and the value of ft/TT is 0.547.

In addition, (1/f1)/(1/ft) of the first lens 110 is 0.952, (1/f2)/(1/ft) of the second lens 120 is -1.545, and (1/f3)/(1/ft) of the third lens 130 is 1.481. Further, the value of the left-hand side of Expression (4) is 0.888. By using such design values, the micro-projector optical system 100 can achieve the characteristics shown in FIGS. 14 and 15.

As described above, according to the micro-projector optical system 100 of the present embodiment, a compact micro-projector lens can be realized with a simple configuration. The micro-projector optical system 100 can form a bright image by adjusting an aperture size of the aperture stop 101. In addition, the micro-projector optical system 100 can maintain the favorable OTF from low spatial kind frequencies to high spatial frequencies from the central image height to the peripheral image height, and can achieve favorable imaging performance by reducing various aberrations.

An example has been described in which the glasses-type terminal 10 according to the present embodiment displays an image formed by the micro-projector optical system 100 on the display surface 20, but the present embodiment is not limited thereto. The display surface 20 may be, for example, a waveguide that propagates and projects image light. Such a waveguide is described in Patent Document 2, for example, and the micro-projector optical system 100 can also be applied to such known techniques.

The present invention is explained based on the exemplary embodiments. The technical scope of the present invention is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

### [Description of symbols]

10 Glasses-type terminal
20 Display surface
30 Frame
40 Image light emission unit
41 Display panel
100 Micro-projector optical system
101 Aperture stop
110 First lens
111 First lens surface
112 Second lens surface
120 Second lens
121 Third lens surface
122 Fourth lens surface
130 Third lens
131 Fifth lens surface
132 Sixth lens surface

## Claims

1. A micro-projector optical system for displaying an incident image light onto a display surface, the micro-projector optical system comprising:
a first lens, a second lens, and a third lens, in order from a side of the display surface, wherein a paraxial refractive power of the first lens and the third lens is positive, a paraxial refractive power of the second lens is negative,
where ft is an overall focal length of the micro-projector optical system and f1 is a focal length of the first lens, the first lens satisfies the following expression, $\frac{\left(\frac{1}{f 1}\right)}{\left(\frac{1}{ft}\right)} ≧ 0.6$
where f2 is a focal length of the second lens, the second lens satisfies the following expression, and $\frac{\left(\frac{1}{f 2}\right)}{\left(\frac{1}{ft}\right)} ≦ - 1$
where f3 is a focal length of the third lens, the third lens satisfies the following expression, $\frac{\left(\frac{1}{f 3}\right)}{\left(\frac{1}{ft}\right)} ≧ 1$

2. The micro-projector optical system according to claim 1, wherein the first lens, the second lens, and the third lens further satisfy the following expression, $\frac{\left(\frac{1}{f 1}\right) + \left(\frac{1}{f 2}\right) + \left(\frac{1}{f 3}\right)}{\left(\frac{1}{ft}\right)} < 1.0$

3. The micro-projector optical system according to claim 1, wherein at least one of a first surface on a side of the display surface and a second surface opposite to the first surface of at least one of the first lens, the second lens, and the third lens is aspherical.

4. The micro-projector optical system according to claim 1, wherein the second lens is a meniscus lens in which a first surface on a side of the display surface and a second surface opposite to the first surface are convex toward the third lens along an optical axis.

5. The micro-projector optical system according to claim 1, further comprising: an aperture stop provided between the display surface and the first lens.

6. The micro-projector optical system according to claim 5, wherein where TT is a distance from the aperture stop to an image plane on which the image light is formed, an overall focal length ft of the micro-projector optical system satisfies the following expression, $\frac{ft}{TT} ≧ 0.4$

7. The micro-projector optical system according to claim 1, wherein at least one of a first surface on a side of the display surface and a second surface opposite to the first surface of at least one of the first lens, the second lens, and the third lens has a refractive power gradient such that the sign (positive or negative) of a refractive power on an optical axis is reversed toward an outer edge of the lens.

8. A glasses-type terminal worn by a user comprising:
the display surface that is provided in at least one of a lens for a right eye and a lens for a left eye of the user, and displays the image light so that the user can visually recognize the image light;
a frame that fixes the lens for the right eye and the lens for the left eye of the user;
an image light emission unit that is provided in the frame and emits the image light; and
the micro-projector optical system according to any one of claims 1 to 7, which is provided in the frame and receives the image light emitted from the image light output unit, and displays the incident image light on the display surface.
